Europäisches Patentamt

European Patent Office

Office européen des brevets

(19)

(11) Publication number: **0 306 278**
A1

(12) **EUROPEAN PATENT APPLICATION**

(21) Application number: **88308032.7**

(22) Date of filing: **31.08.88**

(51) Int. Cl.⁴: **B 01 D 46/26**
**B 01 D 50/00**

(30) Priority: **31.08.87 JP 218123/87**
**31.08.87 JP 218126/87**
**31.08.87 JP 133313/87**

(43) Date of publication of application:
**08.03.89 Bulletin 89/10**

(84) Designated Contracting States:
**CH DE FR GB IT LI**

(71) Applicant: **TABAI ESPEC CO., LTD.**
**5-6 Tenjinbashi 3-chome**
**Kita-ku Osaka (JP)**

**ITOMAN & CO., LTD.**
**46 4-chome Hommachi**
**Higashi-ku Osaka (JP)**

**Uchida, Taichi**
**29 Kamibetto-cho Kitashirakawa**
**Sakyo-ku Kyoto (JP)**

(72) Inventor: **Nagashima, Tsuneo**
**c/o TABAI ESPEC CO. LTD., 5-6 Tenjinbashi 3-chome**
**Kita-ku, Osaka (JP)**

**Yamne, Makoto**
**c/o TABAI ESPEC CO. LTD., 5-6 Tenjinbashi 3-chome**
**Kita-ku, Osaka (JP)**

(74) Representative: **Dodd, David Michael et al**
**Barlow Gillett & Percival 94 Market Street**
**Manchester M1 1PJ (GB)**

The title of the invention has been amended (Guidelines for Examination in the EPO, A-III, 7.3).

(54) **Filter for eliminating oil unit from air.**

(57) Oil removing apparatus for use in cleaning gas usually polluted air with entrained oil to improve the gas flow and efficiency of operation. A main housing (6) has gas inlet provision (1, 2), a ventilation chamber (11) form filtering provision (7-10) to gas outlet provision (12, 13), and oil discharge means from the main chamber (6). The ventilation chamber (11) is formed gradually enlarging in the rotating direction of a fan (7) of the filtering means. An inner end (5) of a guide for bringing gas to the fan (7) is flared to a larger diameter facing the fan (7). A drum (10) having a rotary filter (8), also a fixed filter, has multiple gas exit holes in its periphery which holes have curved entries for gas flow outwardly.

Fig. I

**Description**

## OIL REMOVAL FROM AIR ETC.

This invention relates to removing oil as droplets or oil mist from gas, particularly from polluted air in a factory or other environment susceptible to oil becoming entrained in air.

Normal use is to cleanse air, but application must, in principle apply to any gas with entrained oil or similar matter.

In conventional apparatus, air drawn in from an inlet and driven through a filter by the fan exits the filter into a ventilation chamber or passage of substantially constant sectional size about the filter. Where first air enters the ventilation chamber or passage, air pressure is small and air flow from the filter is efficient. As more air is discharged into that chamber or passage, say from more of the circumference of a conventional rotary filter, air pressure increases towards the exit from the ventilation chamber or passage, say in the rotating direction of the fan, and efficiency of air flow out of the filter tends to decrease. In such prior apparatus, therefore, compromise regarding air flow efficiency are inevitible.

Also, in the conventional apparatus, air guide provision from the inlet to the fan is tubular straight to an inner squared-off end facing the fan. As the diameter of this tubular guide is generally smaller than the outside diameter of the fan, the air flow out of the guide does not reach the outer circumference of the fan. Air flow is low or non existent at and near the outer circumference of the fan, leading to poor efficiency of the fan.

Where a drum about the fan, and with a filter at or adjacent its inner surface, is rotated together with the fan, multiple small holes through the drum outer surface serve to discharge air stripped of oil after being drawn into and forced out of the drum by means of the fan, oil being absorbed by the filter. However, small holes simply pierced in the drum lead to screening noise and disturbed air flow below those holes, causing lower air flow than should be possible simply from comparison of inlet size and total of drum holes, and there is undue pressure loss.

This invention aims at improving operation compared with the prior art discussed above.

In one aspect, this invention provides an exit gas provision presenting increasing exit gas accomodation about a filter means through which said gas is drawn and expelled. That results in improved air flow and efficiency of operation without deleterious pressure build-up or loss of pressure.

In another aspect of this invention, gas drawn through a hollow guide means to filtering means is caused to spread out as it enters the filtering means. Convenient provision results in the whole of a fan receiving gas from the guide means, preferably by following flared exit therefrom.

In another aspect of this invention exit gas flow from multiple small holes out of filtering means is smoothed and made quiet by converging entries for gas to those holes.

In prefered embodiments of this invention a filter is disposed outside a fan for drawing in air with entrained oil from an inlet hole and diffusing it outward through the filter, and a ventilation chamber is provided outside the filter and having a gradually increased spacing from the filter in the rotating direction of the fan.

A tubular guide for air from the inlet hole towards the fan has its inner end flared by curving so that its diameter becomes greater towards the fan.

A drum having a filter means through which air is diffused outwardly has multiple small holes that have curved entries for air to reach those holes after passing through the filter means. Smooth air flow and efficient oil removal results from such prefered provisions.

A said guide for air to the filtering means can have an inlet opening of greatest diameter and a filter thereat, and a middle part of least diameter leading to an air exit end that is outwardly curved to have a larger diameter towards the fan.

For exiting filtered air said multiple small holes curved entries thereto assure air flow smoothly following their curvature, so that wind screening noise otherwise likely at plain such holes is subsequently reduced or eliminated and resistance to air flow is decreased, thereby increasing air flow rate and reducing pressure loss.

Specific implementation of embodiments of this invention will now be described by way of example with reference to the accompanying drawings, in which:

Figs. 1 to 4 show embodiment of this invention for which Fig. 1 is a longitudinal sectional view, Fig. 2 is a sectional view on line A-A of Fig. 1, Fig 3 is an outline front perspective view, and Fig. 4 is an outline rear perspective view;

Fig. 5 is a perspective view of an air guide;

Fig. 6 is a part sectional view of a side of a filter drum,

Fig. 7 is a sectional view on line B-B of Fig. 6, and

Fig. 8 at (a), (b) has explanatory diagrams showing air flow through holes in the drum compared with the prior art.

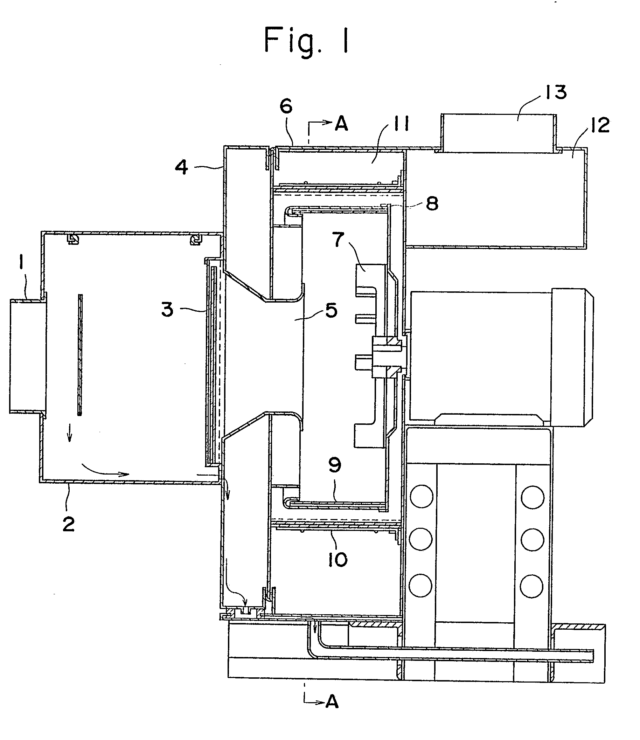

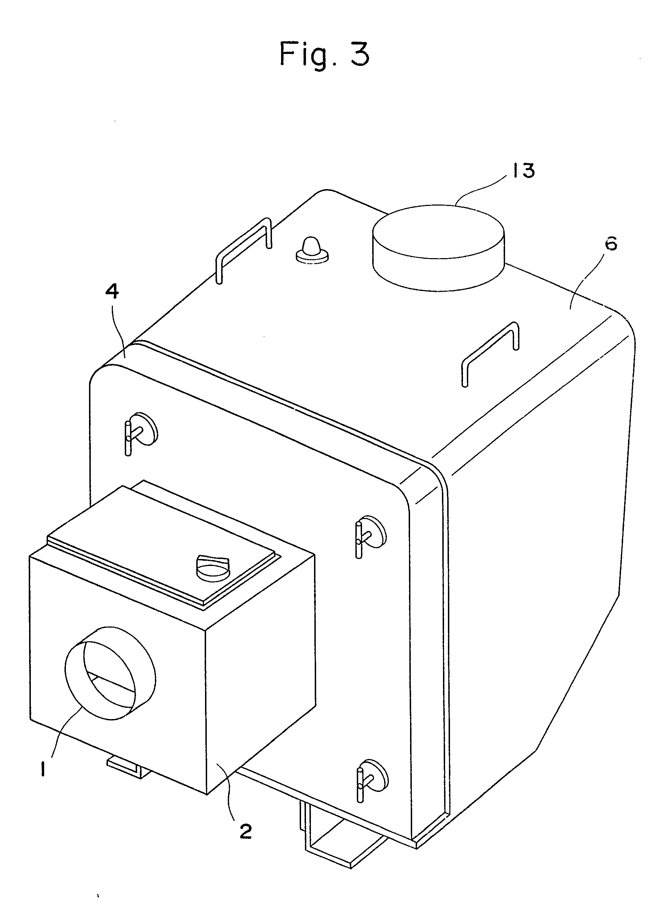

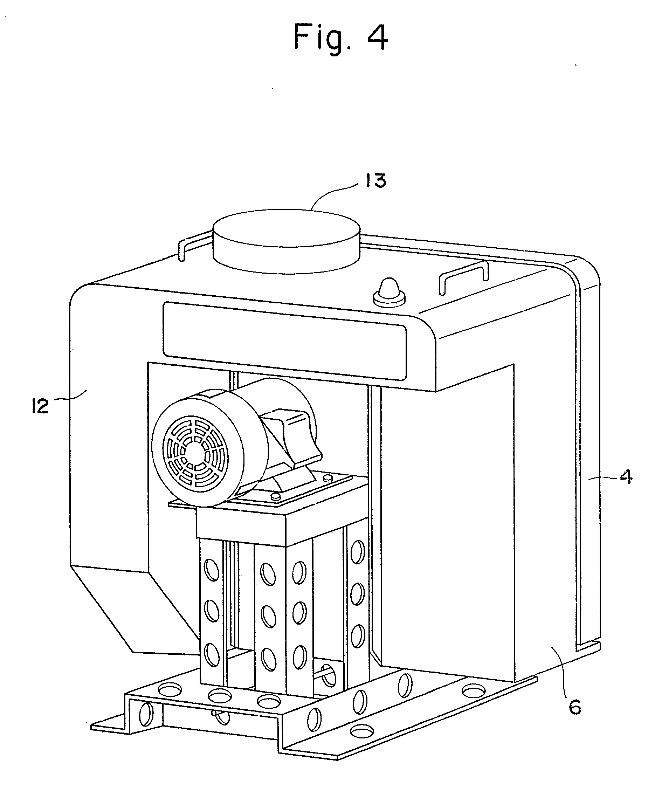

In Figs. 1 to 4, air drawn by a fan 7 through inlet hole 1 enters a straightening box 2 then goes into a drum 8 (outside the fan in a main housing 6) by way of a guide 5 entrant door 4 from a front filter 3. This drum 8 has an inner circumferential filter 9 rotating with the fan 7 and air passing through this rotary filter 9 further passes through a fixed circumferential outer filter 10 and into a ventilation chamber 11 (about the drum 8) to an exit guide 12 at the rear part of the main body case 6, and is discharged from an exhaust port 13.

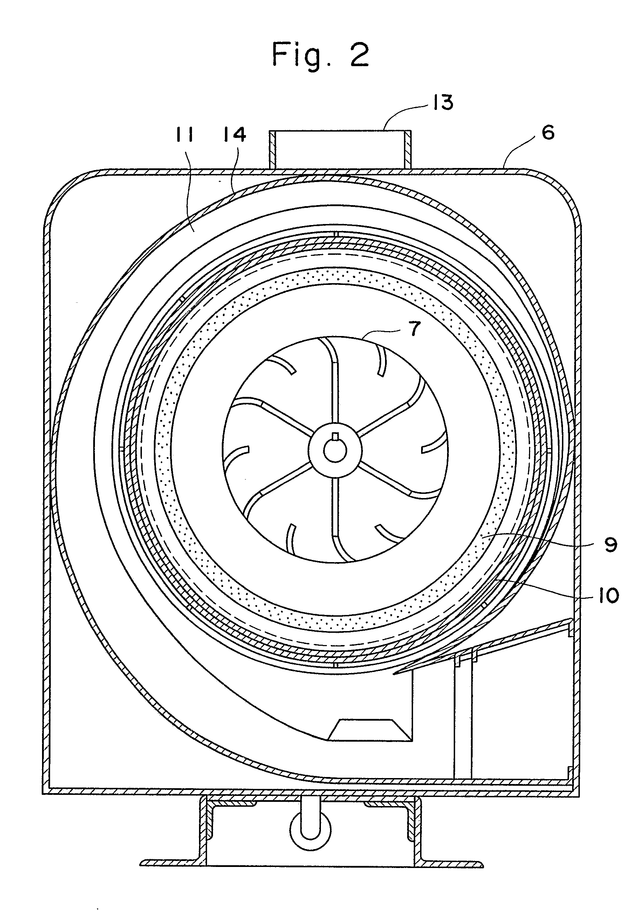

As shown, the rotary filter 9 and fixed filter 10 are disposed outside the fan 7, and the ventilation chamber 11 is formed outside these filters, actually with a sectional area that becomes gradually larger in the direction of rotation of the fan 7. Specifically, this ventilation chamber 11, has an outer guide wall 14 in form of a spiral inside the main body case 6 and the space gradually increases between the fixed filter 10 and the guide wall 14 in the direction of rotation of the fan 7, see Fig. 2.

As the fan 7 rotates, the air leaves the entire circumference of the fixed filter 10. For a ventilation chamber 11 of constant sectional size as hitherto, air pressure in the ventilation chamber 11 will increase and flow from the fixed filter 10 decrease in the direction of rotation of the fan 7. For the illustrated embodiment of this invention, however, since the ventilation chamber 11 increases in sectional size in the direction of rotation of the fan 7, air pressure in the ventilation chamber 11 will not increase cumulatively as air enters successively from the entire circumference of the fixed filter 10, and the air flow efficiency will not be impaired about the entire circumference of the fixed filter 10. Resulting air flow is much smoother, and oil and dust can be removed in a more efficient manner.

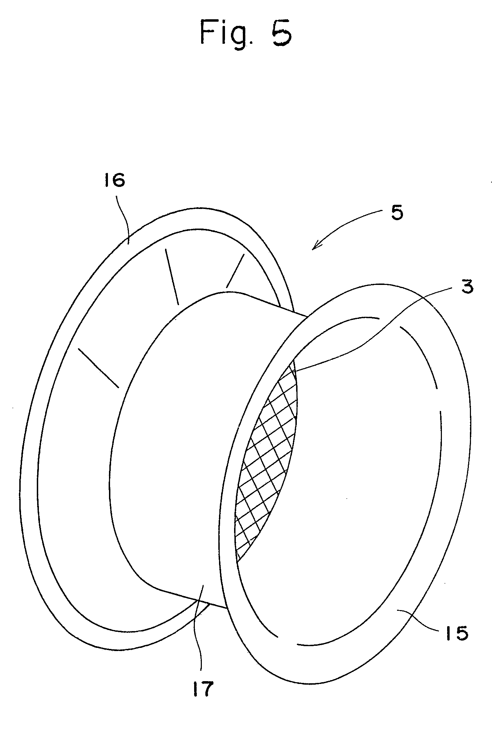

Fig. 5 shows detail of embodiment of a second aspect of this invention by way of a flared inner end 15 of the guide 5 from the straightening box 2 into the drum 8 for air containing oil etc drawn in from the inlet hole 1. Air from the guide 5 exits facing the fan 7 and the outward curving at 15 towards the fan 7 means the final exit end diameter of the guide 5 is larger than a middle part 12 of the guide 5. Front filter 3 is fitted at the inlet end 16 of the guide 5, which has a larger diameter again and tapers down to the middle part 17.

Air drawn through the guide 5 passes easily through the filter 3, reduces and speeds up through the middle part 17, then spreads out as it flows over the curving exit edge 15 and towards the fan 7. In that way air flowing out from the exit edge 15 reaches substantially the entire blade surface of the fan 7 whose diffusing action within the drum 8 is thus made more efficient and effective.

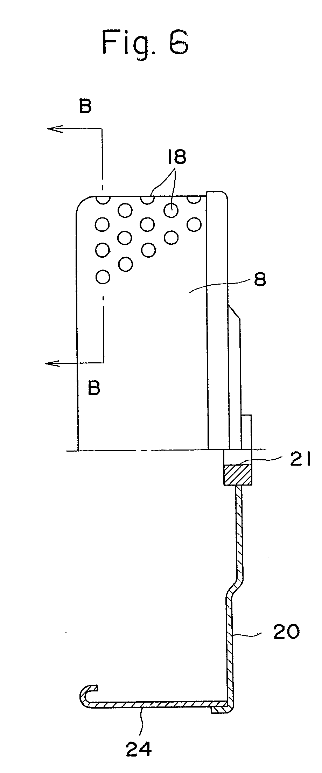

In Figs. 6 to 8, showing embodiment of another aspect of this invention, multiple small holes 18 in the drum 8 have converging entries 19 from the interior of the drum 8.

In more detail, the drum 8 has a tubular part 24 and a rear plate 20 with a bossed hole 21 for mounting on a rotary shaft 23 of a motor 22 driving the fan 7. The rotary filter 9 is fitted between the inner side of the rear plate 20, and free edging of the tubular part 24 that is turned back on itself about the edge of the rotary filter 9 held thereby. Air passes through the multiple holes 18 in the tubular part 24 by way of curved entries out of the part 24.

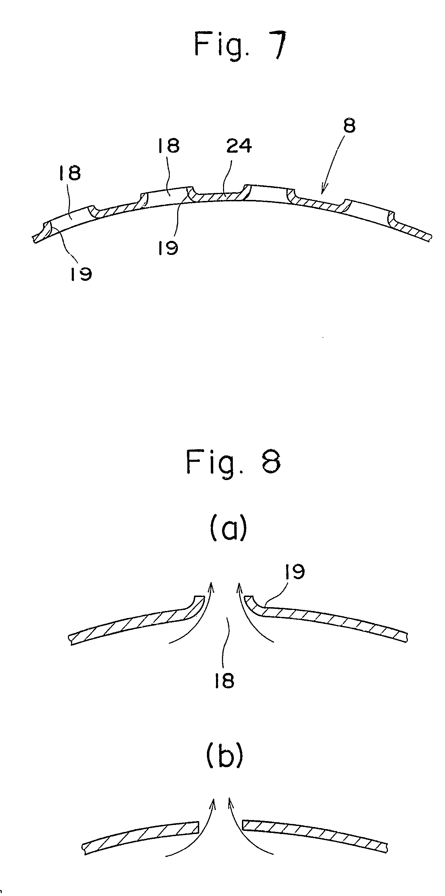

In operation, the drum 8 rotates in the same direction and at the same speed as the fan 7. Air drawn into the main body case 6 is also diffused into and out through the drum 8 by the fan, and centrifugal action assists separation of oil. Separated oil droplets coalesce and become larger in size while being absorbed and rendered stationary by the rotary filter 9. The air then discharges through the holes 18 also by the centrifugal action from rotation of the drum 8, and is recovered in the drain chamber 26 through drain holes 25 from the ventilation chamber 11. The air discharged from the holes 18 in the drum 8 is substantially purged of oil. The way the curved entries 19 of the holes 18 result in exiting air flowing smoothly out is indicated in Fig. 8(a), compared with Fig. 9(b) where entry edges must cause noise and turbulence.

## Claims

1. Oil removing apparatus for use in cleaning gas, usually polluted air with entrained oil droplets or oil mist, the apparatus comprising a main housing with gas inlet and gas outlet provisions and oil discharge means from the main housing, wherein filtering means is disposed about rotary means for drawing in gas containing oil through said inlet provision and diffusing the gas outward through the filtering means, and associated ventilating provision about the filtering means presents increasing exit gas accommodation in the direction of rotation of the rotary means.

2. Apparatus according to claim 1, wherein the filtering means comprises a fixed filter outside a rotary filter driven with a fan of said rotary means.

3. Apparatus according to claim 1 or claim 2, wherein said ventilating provision comprises a guide wall in a spiral with a spacing from the filtering means that increases in said direction.

4. Oil removing apparatus for use in cleaning gas, usually polluted air with entrained oil, the apparatus comprising a main housing with gas inlet and outlet provisions and oil discharge means from the main housing, wherein an inner end of a guide for gas drawn in by means for drawing the gas by way of said inlet provision and diffusing the gas outward said outlet provision is flared toward said means for drawing in and diffusing gas.

5. Apparatus according to claim 4, wherein the guide has associated filtering means at its gas-entry end which end has a larger diameter then a middle part leading to its inner flared end.

6. Apparatus according to claim 5, wherein said gas entry-end presents an opening larger than the diameter of rotary said means for drawing in and diffusing gas.

7. Oil mist removing apparatus for use in cleaning gas, usually polluted air with entrained oil, the apparatus comprising a main housing with gas inlet and outlet provisions and oil discharge means from the main housing, wherein gas filtering means including a filter member is provided in the main body and has multiple holes for gas exit therefrom, which holes have curved entries thereto from the direction of gas flow.

8. Apparatus according to claim 7, wherein the gas filtering means comprises a drum having an inner rotary filter member and an outer fixed filter member inside a periphery of said drum which periphery has said multiple holes.

9. Apparatus according to claim 7 or claim 8, wherein the gas filtering means comprises a tubular part having said multiple holes and an end drive plate having a mounting hole taking a rotary shaft of a motor for driving a or said rotary filter member and said means for drawing gas into the filter chamber and diffusing the gas out of the filtering member.

10. Apparatus according to claim 9, wherein the rotary filtering member is fitted between an of said end drive plate and a free edge part of the tubular part that is turned over to hold the rotary filtering member in place.

# Fig. I

Fig. 2

# Fig. 3

# Fig. 4

# Fig. 5

# Fig. 6

# Fig. 7

# Fig. 8

## (a)

## (b)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 378 555 (KABUSHIKI KAISHA SANETSU) --- | | B 01 D 46/26 B 01 D 50/00 |
| A | PATENT ABSTRACTS OF JAPAN, vol. 5, no. 188 (C-81)[860], 27th November 1981; & JP-A-56 111 016 (SANETSU K.K.) 02-09-1981 --- | | |
| A | FR-A-2 132 868 (GENERAL DYNAMICS CORP.) --- | | |
| A | GB-A-1 488 500 (AERCOLOGY, INC.) ----- | | |

TECHNICAL FIELDS SEARCHED (Int. Cl.4)

B 01 D 46/00
B 01 D 50/00

The present search report has been drawn up for all claims

| Place of search | Date of completion of the search | Examiner |
|---|---|---|
| THE HAGUE | 19-10-1988 | POLESAK, H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)